# EUROPÄISCHE PATENTSCHRIFT

(11) **EP 2 284 023 B1**
(45) Veröffentlichungstag und Bekanntmachung des Hinweises auf die Patenterteilung: **14.03.2012**
(21) Anmeldenummer: 10168979.2
(22) Anmeldetag: 09.07.2010
(51) Int. Cl.: B60C 1/00, C08L 7/00, C08L 9/00, C08L 21/00, C08L 81/04

(54) **Kautschukmischung**
Rubber compound
Mélange de caoutchouc

(30) Priorität: 22.07.2009 DE 102009026225
(43) Veröffentlichungstag der Anmeldung: 16.02.2011
(73) Patentinhaber: Continental Reifen Deutschland GmbH, 30165 Hannover (DE)
(72) Erfinder: Kölle, Philipp, Dr., 30451, Hannover (DE); Kramer, Thomas, Dr., 31832, Springe (DE); De Riva Perez, Julian, 33203, Gijon (ES); Weber, Christian, Dr., 30826, Garbsen (DE)
(74) Vertreter: Finger, Karsten

(56) Entgegenhaltungen:
- EP-A1- 1 077 228
- GB-A- 1 144 634
- GB-A- 1 561 081
- US-A- 4 269 250
- US-A- 4 421 899
- US-A- 5 610 216

## Beschreibung

Die Erfindung betrifft eine Kautschukmischung, insbesondere für Fahrzeugluftreifen, Gurte, Riemen und Schläuche.

Die Kautschukzusammensetzung des Laufstreifens bestimmt in hohem Maße die Fahreigenschaften eines Reifens, insbesondere eines Fahrzeugluftreifens. Ebenso sind die Kautschukmischungen, die in Riemen, Schläuchen und Gurten Verwendung vor allem in den mechanisch stark belasteten Stellen finden, für Stabilität und Langlebigkeit dieser Gummiartikel im Wesentlichen verantwortlich. Daher werden an diese Kautschukmischungen für Fahrzeugluftreifen, Gurte, Riemen und Schläuche sehr hohe Anforderungen gestellt.

Durch den teilweisen oder vollständigen Ersatz des Füllstoffes Ruß durch Kieselsäure in Kautschukmischungen wurden z.B. die Fahreigenschaften eines Reifens in den vergangenen Jahren insgesamt auf ein höheres Niveau gebracht. Die bekannten Zielkonflikte der sich gegensätzlich verhaltenden Reifeneigenschaften, bestehen allerdings auch bei kieselsäurehaltigen Laufstreifenmischungen weiterhin. So ist eine Verbesserung der Rissbeständigkeit des Reifens in der Regel mit einem erhöhten Wärmeaufbau und mit einem schlechteren Abriebsverhalten des Reifens verbunden.

Gute Rissbeständigkeit und geringer Abrieb sind auch bei technischen Gummiartikeln, wie Gurte und Riemen, ein wichtiges Qualitätskriterium.

Um diese Zielkonflikte zu lösen, sind schon vielfältige Ansätze verfolgt worden. So hat man beispielsweise unterschiedlichste Polymere, Harze und hochdisperse Füllstoffe für Kautschukmischungen eingesetzt und man hat versucht, die Vulkanisateigenschaften durch Modifikation der Mischungsherstellung zu beeinflussen.

Der Zielkonflikt zwischen Reißwiderstand und Wärmebildung lässt sich beispielsweise über das Vulkanisationssystem derart beeinflussen, dass eine geeignete Netzknotendichte des Polymer-Füllstoffsystems eingestellt werden kann. In der Kautschukindustrie sind hierzu verschiedene spezielle Vemetzungsprodukte bekannt, die unter anderem unter den Handelsnamen Vulcuren^{™}, Perkalink^{™} oder Duralink^{™} erhältlich sind. Diese sind allerdings hinsichtlich ihres Anwendungsbereiches nur bedingt verfügbar und können lediglich instabilere lineare Netzwerkknoten im Polymer-Füllstoffnetzwerk bilden. Des Weiteren wirken sie oft gleichzeitig als Netzwerkbildner und Vulkanisationsbeschleuniger, was nicht für jede Anforderung geeignet ist. Eine verlässliche Lösung des genannten Zielkonfliktes ist somit nicht möglich.

In GB 1,144,634 wird eine Kautschukmischung offenbart, die eine Verbindung mit der allgemeinen Formel (SₙRSₘ)ₓ enthält, welche Einfluss auf die Vernetzung der Kautschukmischung hat. Die Kautschukmischung zeigt verbesserte Vernetzungseigenschaften und keine "Ausblühungen", bezüglich der Wärmebildung und des Reißwiderstands werden keine Angaben gemacht.

Des Weiteren ist zum Beispiel aus DE602005003902T2 bekannt, dass die Wärmeentwicklung einer Kautschukmischung für einen Notlaufreifen reduziert werden kann, wenn eine Verbindung der Formel -(R-Sₓ)ₙ-, worin R (CH₂-CH₂-O)ₘ-CH₂-CH₂ ist, x eine ganze Zahl zwischen 3 und 6 ist, n eine ganze Zahl zwischen 10 und 400 ist und m eine ganze Zahl zwischen 2 und 5 ist, verwendet wird. Hierbei wird die Kautschukmischung allerdings hinsichtlich ihrer Härte deutlich beeinflusst.

Der Erfindung liegt daher die Aufgabe zu Grunde, eine Kautschukmischung, insbesondere für Fahrzeugluftreifen, Gurte, Riemen und Schläuche, bereitzustellen, die den Zielkonflikt zwischen Reißwiderstand und Wärmebildung löst bzw. verbessert, während die weiteren physikalischen Eigenschaften auf einem ähnlichen Niveau verbleiben.

Gelöst wird diese Aufgabe durch eine Kautschukmischung mit folgender Zusammensetzung:
- zumindest einen polaren oder unpolaren Kautschuk und
- zumindest einen Füllstoff und
- zumindest ein verzweigtes Polysulfidpolymer mit wenigstens einem Heteroatom in der Hauptkette und
- weitere Zusatzstoffe.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Überraschenderweise wurde gefunden, dass durch die Kombination von zumindest einem polaren oder unpolaren Kautschuk mit zumindest einem hellen und / oder dunklen Füllstoffe und zumindest einem linearen oder verzweigtem Polysulfidpolymer mit einem Heteroatom in der Hauptkette sich der Reißwiderstand bei gleichzeitiger Reduzierung des Wärmeaufbaus signifikant verbessern lässt. Diese Verbesserung ist für thermisch und /oder oxidativ gealterte Kautschukmischungen besonders ausgeprägt, so dass sich gleichzeitig eine deutliche Optimierung der Alterungsbeständigkeit zeigt. Insbesondere relevant ist hierbei, dass die physikalischen Eigenschaften der Kautschukmischung auf gleichem Niveau verbleiben. Dies gilt nicht nur für den Fahrzeuglaufstreifen, bei geteiltem Laufstreifen insbesondere für die Base, sondern auch für weitere innere Reifenbauteile. Die Kautschukmischungen für die weiteren inneren Reifenbauteile werden im Folgenden zusammengefasst, und wie in der Reifentechnologie üblich, auch als body compounds oder body-Mischungen bezeichnet.

Weitere Anwendung findet die erfindungsgemäße Kautschukmischung in der Mischungsentwicklung für Riemen, Gurte und Schläuche. Diese technischen Gummiartikel finden im täglichen Leben überall Verwendung, z.B. in Aufzügen, in der Automobilindustrie, in der Rohstoffindustrie, in der Lebensmittelindustrie und in der Medizintechnik. Daher kommt auch hier den verbesserten Reißeigenschaften mit geringerem Wärmeaufbau bei gleich bleibenden weiteren Mischungseigenschaften, vor allem bei verbesserter Alterungsbeständigkeit, eine zentrale Bedeutung zu.

Die Kautschukmischung enthält zumindest einen polaren oder unpolaren Kautschuk.

Der polare oder unpolare Kautschuk ist dabei ausgewählt aus der Gruppe, bestehend aus natürlichem Polyisopren und / oder synthetischem Polyisopren und / oder Butadien-Kautschuk und / oder Styrolbutadienkautschuk und / oder lösungspolymerisierter Styrolbutadienkautschuk und / oder emulsionspolymerisierter Styrolbutadienkautschuk und / oder Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Epichlorhydrinkautschuk und / oder Styrol-Isopren-Butadien-Terpolymer und / oder hydrierter Acrylnitrilbutadienkautschuk und / oder Isopren-Butadien-Copolymer und / oder hydrierter Styrolbutadienkautschuk.

Der Kautschuk, insbesondere der Styrolbutadienkautschuk, mit Hydroxylgruppen und / oder Epoxygruppen und / oder Siloxangruppen und / oder Aminogruppen und / oder Aminosiloxan und / oder Carboxylgruppen und / oder Phtalocyaningruppen modifiziert sein. Es kommen aber auch weitere, der fachkundigen Person bekannte, Modifizierungen, auch als Funktionalisierungen bezeichnet, in Frage.

Insbesondere der Butadienkautschuk kann ganz oder teilweise hydriert sein.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, zum Einsatz.

Insbesondere natürliches Polyisopren, synthetisches Polyisopren, Butadien-Kautschuk, Styrolbutadienkautschuk, lösungspolymerisierter Styrolbutadienkautschuk, emulsionspolymerisierter Styrolbutadienkautschuk oder Halobutylkautschuk finden Verwendung bei der Herstellung von Fahrzeugreifen.

Verschiedene Anwendungen im Reifen (Lauffläche/Body, PKW/LKW) sind mit jeweils unterschiedlichen bevorzugten Kautschukzusammensetzungen verbunden:
PKW-Laufstreifen:
   Die Kautschukmischung enthält bevorzugt zumindest einen Styrol-Butadien-Kautschuk (SBR, vorzugsweise einen lösungspolymerisierten Styrol-Butadien-Kautschuk (SSBR)).
LKW-Laufstreifen:
   Die Kautschukmischung enthält bevorzugt 40 bis 100 phr natürliches Polyisopren und / oder synthetisches Polyisopren, 0 bis 50 phr Butadienkautschuk, 0 bis 60 phr Styrol-Butadien-Kautschuk, vorzugsweise lösungspolymerisierten Styrol-Butadien-Kautschuk.
Body:
   Die Kautschukmischung enthält bevorzugt 20 bis 100 phr natürliches Polyisopren und / oder synthetisches Polyisopren, 0 bis 80 phr Butadienkautschuk, 0 bis 50 phr Styrol-Butadien-Kautschuk.

Die Kautschukmischung enthält 1 bis 300 phr, bevorzugt 10 bis 250 phr, zumindest eines Füllstoffs.

Wird die Kautschukmischung im PKW-Laufstreifen verwendet, so beträgt die Füllstoffmenge bevorzugt 50 bis 250 phr, besonders bevorzugt 60 bis 200 phr, ganz besonders bevorzugt 45 bis 150 phr. Bei Verwendung in LKW-Laufstreifen beträgt die Füllstoffmenge bevorzugt 40 bis 70 phr und besonders bevorzugt 40 bis 55 phr, ganz besonders bevorzugt 20 bis 60 phr, während der Füllstoff für Anwendungen in Body-Mischungen bevorzugt 30 bis 80 phr, bevorzugt 10 bis 50 phr, beträgt.

In einer besonderen Ausführungsform weisen wenigstens 10 phr des Füllstoffs Silanreaktive Gruppen auf der Oberfläche, wie z. B. OH-Gruppen, auf. Dieser Füllstoff kann aus den bekannten Füllstoffen, wie amorphe Kieselsäure, anderen mineralischen Füllstoffen oder modifizierten Polymermikrogelen, z.B. Nanoprene^{®} der Fa. LanXess, ausgewählt werden.

Die in der Reifenindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.

Erfindungsgemäß werden Kieselsäuren mit einer Stickstoff-Oberfläche zwischen 100 m²/g und 300 m²/g, bevorzugt zwischen 120 und 300 m²/g, besonders bevorzugt zwischen 140 und 250 m²/g, und einer CTAB-Oberfläche zwischen 100 und 250 m²/g , bevorzugt zwischen 120 und 230 m²/g und besonders bevorzugt zwischen 140 und 200 m²/g, eingesetzt.

Wird Ruß als Hauptfüllstoff verwendet, so werden erfindungsgemäß Ruße mit einer Iod-Absorptionszahl, gemäß ASTM D 1510, von 75 bis 300 g/kg und einer DPB-Zahl von 80 bis 200 cm³/100 g eingesetzt. Die DBP-Zahl gemäß ASTM D 2414 bestimmt das spezifische Absorptionsvolumen eines Rußes oder eines hellen Füllstoffes mittels Dibutylphthalat.

Bevorzugt ist hierbei, wenn lediglich ein Russtyp in der jeweiligen Kautschukmischung verwendet wird, es können aber auch verschiedene Russtypen in die Kautschukmischung eingemischt werden.

Es ist allerdings auch möglich eine Kombination aus Kieselsäure mit den genannten Eigenschaften und Ruß mit den genannten Eigenschaften als wesentliche Füllstoffkomponente zu verwenden.

Die Kautschukmischung kann neben Kieselsäure und Ruß auch noch weitere Füllstoffe wie Aluminiumhydroxid, Schichtsilikate, Kalk, Kreide, Stärke, Magnesiumoxid, Titandioxid, Kautschukgele, Kurzfasern usw. in beliebigen Kombinationen enthalten.

Von der Gesamtmenge an Kieselsäure können 0 - 100 % durch ein Kupplungsagens, bevorzugt Silan, an die Polymermatrix angebunden werden und / oder 0 - 100 % nicht an die Polymermatrix angebunden werden. Dies bedeutet, dass, ausgehend von der Gesamtmenge an Kieselsäure, diese durch das Kupplungsagens vollständig oder nur teilweise an die Polymermatrix angebunden wird oder keinerlei Anbindung der Kieselsäure an die Polymermatrix erfolgt.

Falls ein Kupplungsagens, in Form von Silan oder einer siliziumorganischen Verbindung, verwendet wird, so beträgt die Menge des Kupplungsagens 0 - 20 phr, bevorzugt 0,1 - 15 phr, besonders bevorzugt 0,5 - 10 phr. Als Kupplungsagenzien können dabei alle der fachkundigen Person für die Verwendung in Kautschukmischungen bekannten verwendet werden. Besonders zu erwähnen sind hierbei Mercaptosilane und hierbei insbesondere solche, welche sich durch eine Reduzierung der leicht flüchtigen organischen Bestandteile auszeichnen, wie sie, beispielhaft für weitere Druckschriften, in DE 10 2005 057 801, WO99/09036, W02002/048256 und W02006/015010 zu finden sind.

Erfindungswesentlich ist, dass die Kautschukmischung zumindest oder verzweigtes Polysulfidpolymer mit einem Heteroatom in der Hauptkette enthält. Heteroatom wird hier synonym verwendet für ein Heteroatom als solches oder eine Heteroatom enthaltende Gruppe.

Derartige Heteroatome bzw. Heteroatom enthaltende Gruppen sind z.B. (-O-), (-S-), (-NR-), (-PR-), (-P(OR)-), (-SiRR'-), (-Si(OR)(OR')-), wobei (-O-) und / oder (-S-) und / oder (-NR-) besonders bevorzugt sind. R bzw R' sind Alkyl-, Aryl- und / oder Silicon-Reste. R bzw. R' können gleich oder verschieden sein.

In einer besonderen Ausführungsform ist das Polysulfidpolymer verzweigt mit einer Verzweigung zwischen 0,1 und 20 mol-% TCP, bevorzugt zwischen 0,1 und 15 mol-% TCP, besonders bevorzugt zwischen 0,1 und 10 mol-% TCP, ganz besonders bevorzugt zwischen 0,1 und 5 mol-% TCP, wiederum ganz besonders bevorzugt zwischen 0,1 und 2 mol-% TCP, enthält.

Verzweigung in mol-% TCP ist eine der fachkundigen Person bekannte Angabe bezüglich des Verzweigungsgrades. So bedeutet z.B. 0,1 mol-% TCP einen Verzweigungsgrad von 0,1 ermittelt mit 1,2,3-Trichlorpropan (TCP).

Bevorzugt wird das Polysulfidpolymer in Mengen von 0,1 bis 20 phr, besonders bevorzugt in Mengen von 0,1 bis 15 phr, ganz besonders bevorzugt in Mengen von 0,1 bis 10 phr, wiederum ganz besonders bevorzugt in Mengen von 0,1 bis 5 phr, wiederum ganz besonders bevorzugt in Mengen von 0,1 bis 2 phr, verwendet.

In einer besonderen Ausführungsform ist das Polysulfidpolymer flüssig mit wenigstens einer Thiolendgruppe und hat eine mittlere Molmasse zwischen 100 und 10000 g/mol, bevorzugt zwischen 100 und 5000 g/mol.

Findet ein flüssiges Polysulfidpolymer mit wenigstens einer Thiolendgruppe Verwendung, so hat dieses bevorzugt folgende Struktur aus difunktionellen und trifunktionellen Einheiten:

### Difunktionelle Einheit

HS-(R-SS)ₙ-R-SH

### Trifunktionelle Einheit

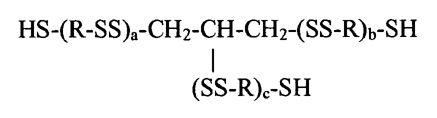

R = -(CH₂)₂-O-CH₂-O-(CH₂)₂-

mita+b+c=n,
wobei n eine natürliche Zahl ist, die Werte zwischen 1 und 40 annehmen kann, wobei es bevorzugt ist, wenn n Werte zwischen 1 und 7 oder zwischen 20 und 21 oder zwischen 26 und 27 annimmt.

In Falle eines verzweigten Polysulfidpolymers muss c ungleich 0 sein.

Das Polysulfidpolymer enthält - im Gegensatz zu der aus GB 1,144,634 bekannten Verbindung mit der allgemeinen Formel (SₙRSₘ)ₓ- nicht nur difunktionelle, sondern auch trifunktionelle Einheiten, so dass eine Mischung aus difunktionellen und trifunktionellen Molekülen vorliegt.

Überraschenderweise hat sich gezeigt, dass durch die Zugabe eines derartigen Polysulfidpolymers sich nicht nur der Zielkonflikt zwischen Reißwiderstand und Wärmebildung entschärfen lässt, sondern die Kautschukmischung gleichzeitig eine signifikante Optimierung der Alterungsbeständigkeit aufweist.

Es können in der Kautschukmischung 0,1 bis 20 phr zumindest eines Weichmachers vorhanden sein. Dieser weitere Weichmacher ist ausgewählt aus der Gruppe, bestehend aus Mineralölen und / oder synthetischen Weichmachern und / oder Fettsäuren und / oder Fettsäurederivaten und / oder Harzen und / oder Faktisse und / oder Glyceriden und / oder Terpenen und / oder Saatenölen und / oder Biomass-To-Liquid-Ölen.

Bei der Verwendung von Mineralöl ist dieses bevorzugt ausgewählt aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle.

Weiterhin enthält die Kautschukmischung noch weitere Zusatzstoffe.

Weitere Zusatzstoffe beinhaltet im Wesentlichen das Vernetzungssystem (Vernetzer, Schwefelspendern und / oder elementaren Schwefel, Beschleuniger und Verzögerer), Ozonschutzmittel, Alterungsschutzmittel, Mastikationshilfsmittel und weitere Aktivatoren. Der Mengenanteil der Gesamtmenge an weiteren Zusatzstoffen beträgt 3 bis 150 phr, bevorzugt 3 bis 100 phr und besonders bevorzugt 5 - 80 phr.

Im Gesamtmengenanteil der weiteren Zusatzstoffe finden sich noch 0,1 - 10 phr, bevorzugt 0,2 - 8 phr, besonders bevorzugt 0,2 - 4 phr, Zinkoxid.

Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert. Das herkömmlicherweise verwendete Zinkoxid weist dabei in der Regel eine BET-Oberfläche von weniger als 10 m²/g auf. Es kann aber auch so genanntes nano-Zinkoxid mit einer BET-Oberfläche von 10 bis 60 m²/g verwendet werden.

Die Vulkanisation der Kautschukmischung wird vorzugsweise in Anwesenheit von elementarem Schwefel oder Schwefelspendern durchgeführt, wobei einige Schwefelspender zugleich als Vulkanisationsbeschleuniger wirken können. Elementarer Schwefel oder Schwefelspender werden im letzten Mischungsschritt in den vom Fachmann gebräuchlichen Mengen (0,4 bis 9 phr, elementarer Schwefel bevorzugt in Mengen von 0 bis 6 phr, besonders bevorzugt in Mengen von 0,1 bis 3 phr) der Kautschukmischung zugesetzt. Zur Kontrolle der erforderlichen Zeit und / oder Temperatur der Vulkanisation und zur Verbesserung der Vulkanisateigenschaften kann die Kautschukmischung vulkanisationsbeeinflussende Substanzen wie Vulkanisationsbeschleuniger, Vulkanisationsverzögerer, die erfindungsgemäß in den obig beschriebenen Zusatzstoffen enthalten sind, und Vulkanisationsaktivatoren, wie obig beschrieben, enthalten.

Der Erfindung liegt weiterhin die Aufgabe zu Grunde, ein Verfahren zur Herstellung einer Kautschukmischung bereitzustellen, die den Zielkonflikt zwischen Reißwiderstand und Wärmebildung löst bzw. verbessert, während die weiteren physikalischen Eigenschaften auf einem ähnlichen Niveau verbleiben.

Gelöst wird diese Aufgabe dadurch, dass während des Verfahren zur Herstellung der Kautschukmischung in einer ersten Mischstufe wenigstens ein lineares oder verzweigtes Polysulfidpolymer mit wenigstens einem Heteroatom in der Hauptkette hinzugefügt wird. Diese Zugabereihenfolge hat sich hinsichtlich der zu lösenden obigen Aufgabe und hinsichtlich der Optimierung der Alterungsbeständigkeit als vorteilhaft erwiesen. Die qualitative und quantitative Mischungszusammensetzung ist jeweils analog zu der bereits obig beschriebenen.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Der Erfindung liegt weiterhin die Aufgabe zu Grunde, obig beschriebene Kautschukmischung, zur Herstellung von Fahrzeugluftreifen, insbesondere zur Herstellung des Laufstreifens eines Reifens und / oder einer Body-Mischung eines Reifens und zur Herstellung von Riemen, Gurten und Schläuchen zu verwenden.

Bei dem Fahrzeugluftreifen handelt es sich um einen PKW-Reifen oder um einen Nutzfahrzeugreifen, so dass die Kautschukmischung für den Laufstreifen und / oder für eine Body-Mischung eines PKWs oder eines Nutzfahrzeuges Verwendung findet.

Der Begriff Body-Mischung beinhaltet im Wesentlichen Seitenwand, Innenseele, Apex, Gürtel, Schulter, Gürtelprofil, Squeege, Karkasse, Wulstverstärker, weitere Verstärkungseinlagen und / oder Bandage.

Zur Verwendung in Fahrzeugluftreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Ist der Laufstreifen, wie eingangs beschrieben, zweigeteilt, so findet die Kautschukmischung bevorzugt Anwendung als Mischung für die Base.

Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings. Zur Verwendung der erfindungsgemäßen Kautschukmischung in Riemen und Gurten, insbesondere in Fördergurten, wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und / oder mehrerer Lagen Kautschukmischung, einer und / oder mehrerer Lagen gleicher und / oder verschiedener Festigkeitsträger und einer und / oder mehreren weiteren Lagen dergleichen und / oder einer anderen Kautschukmischung.

Zur Verwendung der erfindungsgemäßen Kautschukmischung in Schläuchen wird auf die im Handbuch der Kautschuktechnologie, Dr. Gupta Verlag, 2001, Kapitel 13.4 beschriebenen Verfahren verweisen.

Die Erfindung soll nun anhand von Vergleichs- und Ausführungsbeispielen, die in Tabellen 1a bis 1b, 2a bis 2c und 3a bis 3c zusammengefasst sind, näher erläutert werden.

In den Tabellen mit der Kennzeichnung "a" sind jeweils die Mischungszusammensetzungen aufgeführt, in den Tabellen mit der Kennzeichnung "b" sind die physikalischen Eigenschaften dieser Mischungen aufgelistet, während in der Tabelle mit der Kennzeichnung "c" die physikalischen Eigenschaften der gealterten Mischungen aufgelistet sind. Die mit "E" gekennzeichneten Mischungen sind hierbei erfindungsgemäße Mischungen, während es sich bei den mit "V" gekennzeichneten Mischungen um Vergleichsmischungen handelt. Die Alterung der Kautschukmischungen wurde bei 100°C für 3 Tage in einer Klimakammer durchgeführt (Tabelle 2c) bzw. bei 70°C für 10 Tage (Tabelle 3c und Tabelle 4c).

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Shore-A-Härte bei Raumtemperatur gemäß DIN 53 505
- Rückprallelastizität bei Raumtemperatur und 70°C gemäß DIN 53 512
- Spannungswerte bei 100 und 300 % Dehnung bei Raumtemperatur gemäß DIN 53 504
- Bruchenergiedichte bestimmt im Zugversuch gemäß DIN 53 504, wobei die Bruchenergiedichte die bis zum Bruch erforderliche Arbeit, bezogen auf das Volumen der Probe, ist
- Reißenergie bei Raumtemperatur gemäß DIN 53 448
- Weiterreißwiderstand nach Graves bei Raumtemperatur gemäß DIN 53 515
- Bruchdehnung bei Raumtemperatur gemäß DIN 53504

**Tabelle 1a**

| **Bestandteile** | **Einheit** | **V1** | **E1** | **E2** | **E3** | **E4** |
|---|---|---|---|---|---|---|
| Polyisopren^{a} | phr | 60 | 60 | 60 | 60 | 60 |
| BR^{b} | phr | 20 | 20 | 20 | 20 | 20 |
| SSBR^{c} | phr | 20 | 20 | 20 | 20 | 20 |
| Polysulfidpolymer^{d} | phr | -- | 1,0 | -- | -- | -- |
| Polysulfidpolymer^{e} | phr | -- | -- | 1,0 | -- | -- |
| Polysulfidpolymer^{f} | phr | -- | -- | -- | 1,0 | -- |
| Polysulfidpolymer^{g} | phr | -- | -- | -- | -- | 1,0 |
| Ruß, N121 | phr | 45 | 45 | 45 | 45 | 45 |
| Kieselsäure^{h} | phr | 5 | 5 | 5 | 5 | 5 |
| Mineralölⁱ | phr | 1,5 | 1,5 | 1,5 | 1,5 | 1,5 |
| ZnO | phr | 3 | 3 | 3 | 3 | 3 |
| Schwefel | phr | 1,3 | 1,3 | 1,3 | 1,3 | 1,3 |
| Weitere Zusatzstoffe^{j} | phr | 7,8 | 7,8 | 7,8 | 7,8 | 7,8 |

| | | | | | | |
|---|---|---|---|---|---|---|
| ^{a} TSR ^{b} High-cis Polybutadien , cis-Anteil ≥ 95 Gew. -% ^{c} SSBR Styrolbutadienkautschuk, Nipol NS116R, Fa. Nippon Zeon ^{d} Thioplast g4, Fa. Akzo Nobel, Verzweigung: 2 mol-% TCP, n < 7, mittlere Molmasse < 1100 g/mol; SH-Gehalt > 5,9 %, Heteroatom: (-O-) ^{e} Thioplast g44, Fa. Akzo Nobel, Verzweigung: 0,5 mol-% TCP, n < 7, mittlere Molmasse < 1100 g/mol; SH-Gehalt > 5,9 %, Heteroatom: (-O-) ^{f} Thioplast g1, Fa. Akzo Nobel, Verzweigung: 2 mol-% TCP, n = 20 - 21, mittlere Molmasse = 3400 - 3600 g/mol; SH-Gehalt = 1,8 - 2,0 %, Heteroatom: (-O-) ^{g} Thioplast g10, Fa. Akzo Nobel, Verzweigung: 0 mol-% TCP, n = 26 - 27, mittlere Molmasse = 4400 - 4700 g/mol; SH-Gehalt = 1,4 - 1,5 %, Heteroatom: (-O-) ^{h} VN3, Fa. Evonik ⁱ MES ^{j} DTPD, 6PPD, Ozonschutzwachs, Stearinsäure, TBBS | | | | | | |

**Tabelle 1b**

| **Eigenschaften** | **Einheit** | **V1** | **E1** | **E2** | **E3** | **E4** |
|---|---|---|---|---|---|---|
| Härte bei RT | Shore A | 62,4 | 61,05 | 61,4 | 60,55 | 60,9 |
| Rückprall bei RT | % | 46,95 | 46,905 | 47,435 | 47,175 | 47,04 |
| Rückprall bei 70°C | % | 58,9 | 57,52 | 59,42 | 57,565 | 59,09 |
| Spannungswert 100% | MPa | 2,335 | 2,102 | 2,162 | 2,063 | 2,079 |
| Spannungswert 300% | MPa | 13,004 | 11,503 | 11,977 | 11,486 | 11,66 |
| Bruchdehnung | % | 447 | 518 | 495 | 489 | 517 |
| Bruchenergiedichte | J/cm³ | 34,268 | 43,951 | 40,812 | 38,225 | 44,218 |
| Reißenergie | MJ/m³ | 3,7 | 4,38 | 4,47 | 4,45 | 4,51 |
| Weiterreißwiderstand | N/mm | 37,95 | 53,73 | 42,17 | 44,42 | 44,06 |

**Tabelle 2a**

| **Bestandteile** | **Einheit** | **V2** | **E5** | **E6** | **E7** | **E8** |
|---|---|---|---|---|---|---|
| Polyisopren^{a} | phr | 85 | 85 | 85 | 85 | 85 |
| BR^{b} | phr | 15 | 15 | 15 | 15 | 15 |
| Polysulfidpolymer^{d} | phr | -- | 1,0 | -- | -- | -- |
| Polysulfidpolymer^{e} | phr | -- | -- | 1,0 | -- | -- |
| Polysulfidpolymer^{f} | phr | -- | -- | -- | 1,0 | -- |
| Polysulfidpolymer^{g} | phr | -- | -- | -- | -- | 1,0 |
| Ruß, N220 | phr | 48 | 48 | 48 | 48 | 48 |
| Kieselsäure^{h} | phr | 6 | 6 | 6 | 6 | 6 |
| Mineralölⁱ | phr | 2 | 2 | 2 | 2 | 2 |
| ZnO | phr | 3 | 3 | 3 | 3 | 3 |
| Weitere Zusatzstoffe^{j} | phr | 7,6 | 7,6 | 7,6 | 7,6 | 7,6 |
| Schwefel | phr | 1,1 | 0,8 | 0,8 | 0,8 | 0,8 |

| | | | | | | |
|---|---|---|---|---|---|---|
| ^{a} TSR ^{b} High-cis Polybutadien , cis-Anteil ≥ 95 Gew. -% ^{d} Thioplast g4, Fa. Akzo Nobel, Verzweigung: 2 mol-% TCP, n < 7, mittlere Molmasse < 1100 g/mol; SH-Gehalt > 5,9 %, Heteroatom: (-O-) ^{c} Thioplast g44, Fa. Akzo Nobel, Verzweigung: 0,5 mol-% TCP, n < 7, mittlere Molmasse < 1100 g/mol; SH-Gehalt > 5,9 %, Heteroatom: (-O-) ^{f} Thioplast g1, Fa. Akzo Nobel, Verzweigung: 2 mol-% TCP, n = 20 - 21, mittlere Molmasse = 3400 - 3600 g/mol; SH-Gehalt = 1,8 - 2,0 %, Heteroatom: (-O-) ^{g} Thioplast g10, Fa. Akzo Nobel, Verzweigung: 0 mol-% TCP, n = 26 - 27, mittlere Molmasse = 4400 - 4700 g/mol; SH-Gehalt = 1,4 - 1,5 %, Heteroatom: (-O-) ^{h} VN3, Fa. Evonik ⁱ MES DTPD, 6PPD, Ozonschutzwachs, Stearinsäure, TBBS | | | | | | |

**Tabelle 2b**

| **Eigenschaften** | **Einheit** | **V2** | **E5** | **E6** | **E7** | **E8** |
|---|---|---|---|---|---|---|
| Härte bei RT | Shore A | 57 | 58,05 | 56,95 | 58 | 57,3 |
| Rückprall bei RT | % | 47,04 | 46,73 | 46,95 | 46,685 | 46,995 |
| Rückprall bei 70°C | % | 57,185 | 56,525 | 56,615 | 56,57 | 56,575 |
| Spannungswert 100% | MPa | 1,592 | 1,651 | 1,628 | 1,672 | 1,607 |
| Spannungswert 300% | MPa | 9,41 | 9,497 | 9,396 | 9,583 | 9,094 |
| Bruchdehnung | % | 562 | 589 | 588 | 575 | 562 |
| Bruchenergiedichte | J/cm³ | 45,33 | 50,54 | 49,772 | 48,624 | 43,165 |
| Reißenergie | MJ/m³ | 9,7 | 10,32 | 10,71 | 10,41 | 10,49 |
| Weiterreißwiderstand | N/mm | 58,5 | 73,5 | 78 | 58,9 | 55,6 |

**Tabelle 2c**

| **Eigenschaften** | **Einheit** | **V2** | **E5** | **E6** | **E7** | **E8** |
|---|---|---|---|---|---|---|
| Härte bei RT | Shore A | 62,95 | 62,8 | 62,4 | 62,5 | 62,35 |
| Rückprall bei RT | % | 47,35 | 48,29 | 48,65 | 49,145 | 49,1 |
| Rückprall bei 70°C | % | 56,715 | 59,185 | 59,42 | 60,33 | 59,52 |
| Spannungswert 100% | MPa | 2,486 | 2,461 | 2,418 | 2,536 | 2,422 |
| Spannungswert 300% | MPa | 13,2 | 12,865 | 12,741 | 13,243 | 12,634 |
| Bruchdehnung | % | 394 | 386 | 397 | 446 | 424 |
| Bruchenergiedichte | J/cm³ | 25,431 | 23,946 | 25,171 | 34,356 | 29,635 |
| Reißenergie | MJ/m³ | 4,09 | 5,38 | 5,08 | 5,06 | 5,12 |
| Weiterreißwiderstand | N/mm | 49,9 | 45,3 | 52,2 | 51,8 | 53,1 |

**Tabelle 3a**

| **Bestandteile** | **Einheit** | **V3** | **V4** | **V5** | **E9** | **E10** | **E11** |
|---|---|---|---|---|---|---|---|
| Polyisopren^{a} | phr | 100 | 100 | 100 | 100 | 100 | 100 |
| Polysulfidpolymer^{b} | phr | -- | -- | -- | 3,25 | 3,9 | 5,2 |
| Ruß, N221 | phr | 47 | 47 | 47 | 47 | 47 | 47 |
| Mineralöl^{c} | phr | 2,4 | 2,4 | 2,4 | 2,4 | 2,4 | 2,4 |
| ZnO | phr | 3 | 3 | 3 | 3 | 3 | 3 |
| Weitere Zusatzstoffe^{d} | phr | 6 | 6 | 6 | 6 | 6 | 6 |
| TBBS | phr | 1,3 | 1,0 | 1,6 | 1,3 | 1,0 | 1,6 |
| Schwefel | phr | 1,3 | 1,0 | 1,6 | 1,3 | 1,0 | 1,6 |

| | | | | | | | |
|---|---|---|---|---|---|---|---|
| ^{a} TSR ^{b} Thioplast g21, Fa. Akzo Nobel, Verzweigung: 2 mol-% TCP, n = 13 - 16, mittlere Molmasse 2100 - 2600 g/mol; SH-Gehalt 2,5 - 3,1 Heteroatom: (-O-) ^{c} MES ^{e} DTPD, 6PPD, Ozonschutzwachs, Stearinsäure, TMQ | | | | | | | |

**Tabelle 3b**

| **Eigenschaften** | **Einheit** | **V3** | **V4** | **V5** | **E9** | **E10** | **E11** |
|---|---|---|---|---|---|---|---|
| Härte bei RT | Shore A | 62,5 | 59,25 | 64,35 | 61,85 | 57,35 | 63,05 |
| Rückprall bei RT | % | 45,50 | 42,55 | 47,08 | 45,80 | 42,08 | 47,53 |
| Rückprall bei 70°C | % | 60,43 | 56,76 | 64,46 | 63,00 | 54,70 | 64,56 |
| Spannungswert 100% | MPa | 2,33 | 1,93 | 2,91 | 2,42 | 1,66 | 2,73 |
| Spannungswert 300% | MPa | 13,60 | 11,71 | 15,91 | 13,72 | 10,21 | 14,99 |
| Bruchdehnung | % | 461 | 470 | 464 | 522 | 550 | 491 |
| Bruchenergiedichte | J/cm³ | 38,51 | 34,62 | 45,35 | 51,91 | 44,74 | 48,80 |
| Reißenergie | MJ/m³ | 7,93 | 12,07 | 5,52 | 6,97 | 13,27 | 5,48 |
| Weiterreißwiderstand | N/mm | 62,48 | 74,46 | 63,39 | 67,94 | 88,47 | 53,32 |

**Tabelle 3c**

| **Eigenschaften** | **Einheit** | **V3** | **V4** | **V5** | **E9** | **E10** | **E11** |
|---|---|---|---|---|---|---|---|
| Härte bei RT | Shore A | 65 | 63,1 | 68,95 | 65,75 | 60,95 | 67,7 |
| Rückprall bei RT | % | 47,17 | 44,54 | 48,43 | 48,65 | 44,36 | 49,19 |
| Rückprall bei 70°C | % | 61,83 | 57,71 | 63,83 | 63,73 | 58,57 | 65,44 |
| Spannungswert 100% | MPa | 3,248 | 2,668 | 4,024 | 3,402 | 2,35 | 3,786 |
| Spannungswert 300% | MPa | 16,77 | 14,58 | 19,36 | 17,05 | 13,22 | 18,35 |
| Bruchdehnung | % | 389 | 401 | 401 | 396 | 517 | 430 |
| Bruchenergiedichte | J/cm³ | 35,79 | 33,75 | 43,79 | 38,80 | 55,42 | 49,45 |
| Reißenergie | MJ/m³ | 4,69 | 7,44 | 3,05 | 4,52 | 8,31 | 2,65 |

**Tabelle 4a**

| **Bestandteile** | **Einheit** | **V6** | **V7** | **E12** |
|---|---|---|---|---|
| Polyisopren^{a} | phr | 100 | 100 | 100 |
| Polysulfidpolymer^{b} | phr | -- | -- | 2,6 |
| Ruß,N121 | phr | 47 | 47 | 47 |
| Mineralöl^{c} | phr | 2,4 | 2,4 | 2,4 |
| ZnO | phr | 3 | 3 | 3 |
| Antireversionsmittel^{d} | phr | -- | 5,6 | -- |
| Schwefel | phr | 1,0 | 1,5 | 1,5 |
| Weitere Zusatzstoffe^{e} | phr | 9,5 | 9,0 | 9,0 |

| | | | | |
|---|---|---|---|---|
| ^{a} TSR ^{b} Thioplast g21, Fa. Akzo Nobel, Verzweigung: 2 mol-% TCP, n = 13 - 16, mittlere Molmasse 2100 - 2600 g/mol; SH-Gehalt 2,5 - 3,1 Heteroatom: (-O-) ^{c} MES ^{d} Duralink HTS, Fa. Flexsys DTPD, 6PPD, Ozonschutzwachs, Stearinsäure, TMQ, TBBS | | | | |

**Tabelle 4b**

| **Eigenschaften** | **Einheit** | **V6** | **V7** | **E12** |
|---|---|---|---|---|
| Härte bei RT | Shore A | 63,3 | 63,4 | 63,2 |
| Rückprall bei RT | % | 46,55 | 44,23 | 47,0 |
| Rückprall bei 70°C | % | 59,67 | 57,0 | 62,85 |
| Spannungswert 100% | MPa | 2,47 | 2,41 | 2,65 |
| Spannungswert 300% | MPa | 14,63 | 13,0 | 14,81 |
| Bruchdehnung | % | 472 | 524 | 502 |
| Bruchenergiedichte | J/cm³ | 48,02 | 55,63 | 56,64 |

**Tabelle 4c**

| **Eigenschaften** | **Einheit** | **V6** | **V7** | **E12** |
|---|---|---|---|---|
| Härte bei RT | Shore A | 67,1 | 69,8 | 68,3 |
| Rückprall bei RT | % | 48,43 | 47,0 | 49,82 |
| Rückprall bei 70°C | % | 62,22 | 57,76 | 62,17 |
| Spannungswert 100% | MPa | 3,51 | 3,50 | 3,59 |
| Spannungswert 300% | MPa | 18,26 | 16,89 | 18,02 |
| Bruchdehnung | % | 338 | 468 | 461 |
| Bruchenergiedichte | J/cm³ | 25,39 | 49,07 | 50,42 |

Anhand der Ausführungsbeispiele E1 bis E12 (Tabellen 1b, 2b, 2c, 3b, 3c, 4b und 4c) lässt sich deutlich erkennen, dass die Reißindikatoren, hier insbesondere die Bruchenergiedichte und Reißenergie in Summe bzw. die Bruchdehnung, und der als Wärmeaufbauindikator dienende Rückprall bei 70°C gegenüber den Referenzen V 1 bis V7 jeweils signifikant verbessert werden.

Überraschenderweise hat sich gezeigt, dass diese Vorteile bei gealterten Kautschukmischungen, siehe E5 bis E8 in Tabelle 2c bzw. E9 bis E1 in Tabelle 3c und E12 in Tabelle 4c, erhalten bleiben bzw. teilweise sogar verstärkt ausgeprägt sind, so dass sich eine deutliche Alterungsbeständigkeit ergibt.

## Patentansprüche

1. Kautschukmischung, **gekennzeichnet durch** folgende Zusammensetzung:
- zumindest einen polaren oder unpolaren Kautschuk und
- zumindest einen Füllstoff und
- zumindest ein verzweigtes Polysulfidpolymer mit wenigstens einem Heteroatom in der Hauptkette
- weitere Zusatzstoffe.

2. Kautschukmischung nach Anspruch 1, **dadurch gekennzeichnet, dass** das Polysulfidpolymer eine Verzweigung zwischen 0,1 und 20 mol% TCP hat.

3. Kautschukmischung nach einem der Ansprüche 1 bis 2, **dadurch gekennzeichnet, dass** der polare oder unpolare Kautschuk ausgewählt ist aus der Gruppe, bestehend aus natürlichem Polyisopren und / oder synthetischem Polyisopren und / oder Butadien-Kautschuk und / oder Styrolbutadienkautschuk und / oder lösungspolymerisierter Styrolbutadienkautschuk und / oder emulsionspolymerisierter Styrolbutadienkautschuk und / oder Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Epichlorhydrinkautschuk und / oder Styrol-Isopren-Butadien-Terpolymer und / oder hydrierter Acrylnitrilbutadienkautschuk und / oder Isopren-Butadien-Copolymer und / oder hydrierter Styrolbutadienkautschuk.

4. Kautschukmischung nach einem der Ansprüche 1 bis 3, **dadurch gekennzeichnet, dass** der Füllstoff Kieselsäure und / oder Ruß ist.

5. Kautschukmischung nach einem der Ansprüche 1 bis 4, **dadurch gekennzeichnet, dass** sie 1 bis 300 phr Füllstoff enthält.

6. Kautschukmischung nach einem der Ansprüche 1 bis 5, **dadurch gekennzeichnet, dass** sie 0,1 bis 20 phr zumindest eines Polysulfidpolymers enthält.

7. Kautschukmischung nach einem der Ansprüche 1 bis 6, **dadurch gekennzeichnet, dass** das Polysulfidpolymer eine mittlere Molmasse zwischen 100 und 10000 g/mol hat.

8. Verwendung einer Kautschukmischung nach einem der Ansprüche 1 bis 7 zur Herstellung eines Pkw-Reifens oder eines Nutzfahrzeugreifens.

9. Verwendung einer Kautschukmischung nach Anspruch 8 zur Herstellung des Laufstreifens eines Pkw-Reifens oder des Laufstreifens eines Nutzfahrzeugreifens oder einer Body-Mischung eines Pkw-Reifens oder einer Body-Mischung eines Nutzfahrzeugreifens.

10. Verwendung einer Kautschukmischung nach einem der Ansprüche 1 bis 7 zur Herstellung eines Gurtes, Riemens oder Schlauches.

11. Verfahren zur Herstellung einer Kautschukmischung nach einem der Ansprüche 1 bis 7, **dadurch gekennzeichnet, dass** in einer ersten Mischstufe wenigstens ein Polysulfidpolymer mit wenigstens einem Heteropolymer in der Hauptkette hinzugefügt wird.

## Claims

1. Rubber mixture, **characterized by** the following constitution:
- at least one polar or non-polar rubber and
- at least one filler and
- at least one branched polysulphide polymer having at least one heteroatom in the main chain
- other additives.

2. Rubber mixture according to Claim 1, **characterized in that** the degree of branching of the polysulphide polymer is from 0.1 to 20 mol% of TCP.

3. Rubber mixture according to Claim 1 or 2, **characterized in that** the polar or non-polar rubber has been selected from the group consisting of natural polyisoprene and/or synthetic polyisopropene and/or butadiene rubber and/or solution-polymerized styrene-butadiene rubber and/or emulsion-polymerized styrene-butadiene rubber and/or other styrene-butadiene rubber and/or liquid rubbers and/or halobutyl rubber and/or polynorbornene and/or isoprene-isobutylene copolymer and/or ethylene-propylene-diene rubber and/or nitrile rubber and/or chloroprene rubber and/or acrylate rubber and/or fluoro rubber and/or silicone rubber and/or epichlorohydrin rubber and/or styrene-isoprene-butadiene terpolymer and/or hydrogenated acrylonitrile-butadiene rubber and/or isoprene-butadiene copolymer and/or hydrogenated styrene-butadiene rubber.

4. Rubber mixture according to any of Claims 1 to 3, **characterized in that** the filler is silica and/or carbon black.

5. Rubber mixture according to any of Claims 1 to 4, **characterized in that** it comprises from 1 to 300 phr of filler.

6. Rubber mixture according to any of Claims 1 to 5, **characterized in that** it comprises from 0.1 to 20 phr of at least one polysulphide polymer.

7. Rubber mixture according to any of Claims 1 to 6, **characterized in that** the average molar mass of the polysulphide polymer is from 100 to 10 000 g/mol.

8. Use of a rubber mixture according to any of Claims 1 to 7 for producing a car tyre or a commercial-Vehicle tyre.

9. Use of a rubber mixture according to Claim 8 for producing the tread of a car tyre or the tread of a commercial-Vehicle tyre or a body mixture for a car tyre or a body mixture for a commercial-vehicle tyre.

10. Use of a rubber mixture according to any of Claims 1 to 7 for producing a drive belt or other belt or a hose.

11. Process for producing a rubber mixture according to any of Claims 1 to 7, **characterized in that** in a first mixing stage at least one polysulphide polymer having at least one heteroatom in the main chain is added.

## Revendications

1. Mélange de caoutchouc, **caractérisé par** la composition suivants :
- au moins un caoutchouc polaire ou non polaire et
- au moins une charge et
- au moins un polymère de polysulfure ramifié contenant au moins un hétéroatome dans la chaîne principale,
- des additifs supplémentaires.

2. Mélange de caoutchouc selon la revendication 1, **caractérisé en ce que** le polymère de polysulfure a une ramification comprise entre 0,1 et 20 % en moles de TCP.

3. Mélange de caoutchouc selon l'une quelconque des revendications 1 à 2, **caractérisé en ce que** le caoutchouc polaire ou non polaire est choisi dans le groupe constitué par le polyisoprène naturel et/ou le polyisoprène synthétique et/ou le caoutchouc de butadiène et/ou le caoutchouc de styrène-butadiène et/ou le caoutchouc de styrène-butadiène polymérisé en solution et/ou le caoutchouc de styrène-butadiène polymérisé en émulsion et/ou les caoutchoucs liquides et/ou le caoutchouc d'halobutyle et/ou le polynorbornène e t / o u le copolymère d'isoprène-isobutylène et/ou le caoutchouc d'éthylène-propylène-diène et/ou le caoutchouc de nitrile et/ou le caoutchouc de chloroprène et/ou le caoutchouc d'acrylate et/ou le caoutchouc fluoré et/ou le caoutchouc de silicone et/ou le caoutchouc d'épichlorhydrine et/ou le terpolymère de styrène-isoprène-butadiène et/ou le caoutchouc d'acrylonitrile-butadiène hydrogéné et/ou le copolymère d'isoprène-butadiène et/ou le caoutchouc de styrène-butadiène hydrogéné.

4. Mélange de caoutchouc selon l'une quelconque des revendications 1 à 3, **caractérisé en ce que** la charge est la silice et/ou le noir de carbone.

5. Mélange de caoutchouc selon l'une quelconque des revendications 1 à 4, **caractérisé en ce qu'**il contient 1 à 300 pce de charge.

6. Mélange de caoutchouc selon l'une quelconque des revendications 1 à 5, **caractérisé en ce qu'**il contient 0,1 à 20 pce d'au moins un polymère de polysulfure.

7. Mélange de caoutchouc selon l'une quelconque des revendications 1 à 6, **caractérisé en ce que** le polymère de polysulfure a une masse molaire moyenne comprise entre 100 et 10 000 g/mol.

8. Utilisation d'un mélange de caoutchouc selon l'une quelconque des revendications 1 à 7 pour la fabrication d'un pneu pour automobile ou d'un pneu pour utilitaire.

9. Utilisation d'un mélange de caoutchouc selon la revendication 8 pour la fabrication de la bande de roulement d'un pneu pour automobile ou de la bande de roulement d'un pneu pour utilitaire ou d'un mélange de carcasse d'un pneu pour automobile ou d'un mélange de carcasse d'un pneu pour utilitaire.

10. Utilisation d'un mélange de caoutchouc selon l'une quelconque des revendications 1 à 7 pour la fabrication d'une ceinture, d'une courroie ou d'un tuyau.

11. Procédé pour la fabrication d'un mélange de caoutchouc selon l'une quelconque des revendications 1 à 7, **caractérisé en ce que**, lors d'une première étape de mélange, au moins un polymère de polysulfure contenant au moins un hétéroatome dans la chaîne principale est ajouté.
